# EUROPEAN PATENT APPLICATION

(11) **EP 0 877 059 A1**
(43) Date of publication of application: **11.11.1998**
(21) Application number: 97107536.1
(22) Date of filing: 07.05.1997
(51) Int. Cl.: C09D 5/00, C09D 5/08, C09D 133/12

(54) **Primer for PVC-plastisol**

(71) Applicant: FINA RESEARCH S.A., B-7181 Seneffe (Feluy) (BE)
(72) Inventor: Belladone, Michel, 1800 Vilvoorde (BE); Bonfitto, Nazarrio, 7100 La Louvière (BE); Pigeolet, Philippe, 1435 Corbais (BE)

(57) **Abstract**

A carboxy- and hydroxy-functional acrylic polymer cross-linked with a polyisocyanate is used as primer for PVC-plastisol. It is particularly useful for steel substrates, more particularly in coil coating.

## Description

The present invention relates to a primer for polyvinylchloride (PVC)-plastisol. More particularly, it relates to a primer for PVC-plastisol on a steel substrate.

One of the most successful products in coil coating is steel coated with PVC-plastisol. Other applications include the coating of steel cord.

Steel as used herein comprises steel, surface-treated steel (such as phosphated steel) and galvanised steel (such as hot dipped galvanised steel).

PVC-plastisol is a top coating of plastified PVC. It has however practically no adherence to steel. A primer is thus required, which must provide
- adhesion to the steel substrate;
- corrosion protection for the steel substrate; and
- intercoat adhesion between the primer and the PVC-plastisol.

Those properties must be resistant to weathering (particularly exposure to UV light and/or cold temperatures) and/or mechanical deformation.

Acrylate primers are used today as primers for PVC-plastisol; they are based on (co)polymers of alkyl (meth)acrylate(s). Whilst such primers provide good intercoat adhesion and reasonably good adhesion to the steel substrates, they have an insufficient resistance. Typically, adhesion to the steel substrate deteriorates strongly after about 500 hours of QUV B exposure (a definition of QUV B exposure appears in the examples).

There is thus a need in the art for a primer for PVC-plastisol on a steel substrate that would provide a more resistant coated system. The term "coated system" is used herein to describe the composite system consisting of the substrate, the primer and the PVC-plastisol topcoat.

The Applicant has now surprisingly found that a primer based on a carboxy- and hydroxy-functional acrylic polymer, cross-linked with a polyisocyanate, provides excellent properties and resistance.

The primer of the invention is particularly useful for steel substrates to which it both adheres excellently and provides excellent anti-corrosion protection. It is more particularly useful in coil coating, where it has additional (mainly economical) benefits.

The primer of the invention is based on a carboxy- and hydroxy-functional acrylic polymer. The term "acrylic polymer" as used herein represents any (co)polymer of alkyl (meth)acrylate(s) and mixtures thereof, with alkyl groups up to C₁₀. The carboxy-functionality is provided by using the desired amount of one or more carboxy-functional (meth)acrylic monomers in the preparation of the acrylic polymer. The hydroxy-functionality is similarly provided by using the desired amount of one or more hydroxy-functional (meth)acrylic monomers in the preparation of the acrylic polymer.

Monomer selection for obtaining the desired properties is known in the art and need not be described herein. Exemplary textbook references are:
- chapter 8 at pages 95-113 in "Protective Coatings" by Clive H. Hare, Technology Publishing Company, Pittsburgh, PA, 1994;
- chapter 15 at pages 144-157 in "Surface Coatings", vol. I, O.C.C.A, Chapman and Hall, London, 1983;
- "Waterborne and Solvent Based Acrylics and their End User Applications", Oldring and Lam ed., SITA Technology, 1996.

The hydroxy- and carboxy-functional acrylic polymer should have the following properties :
(a) a hydroxyl number of 5 to 40 mg KOH/g, preferably of 10 to 20 mg KOH/g;
(b) an acid number of 2 to 20 mg KOH/g, preferably of 5 to 10 mg KOH/g;
(c) a glass transition temperature (Tg, measured by differential scanning calorimetry) of 50 to 110°C, preferably of 70 to 90°C; and
(d) a weight average molecular weight Mw of 10,000 to 260,000, preferably of 50,000 to 80,000.

The hydroxy-functionality is required for the cross-linking reaction with the polyisocyanate; an excessive hydroxyl number would adversely affect the resistance of the coated system.

The carboxy-functionality is required for obtaining excellent and resistant adhesion on the substrate, particularly on steel substrates. An excessive acid number would impart water sensitivity to the primer coating; it would also impart a higher viscosity to the primer paint, which would have to be compensated by a lower solids content (resulting in an undesired higher solvent content).

An appropriate Tg is required for providing the desired balance between mechanical performance at low temperature and QUV B resistance.

A weight average molecular weight Mw (measured by gel permeation chromatography, GPC) of 10,000 to 260,000 (preferably of 50,000 to 80,000) provides a balance between the properties imparted to the dry primer coating and to the wet primer paint.

The primer of the invention also contains a polyisocyanate cross-linker. Isocyanates for use in polyurethane coatings are well known in the art. An exemplary textbook reference is Chapter 16 at pages 239-266 in "Protective Coatings" by Clive H. Hare, Technology Publishing Company, Pittsburgh, PA, 1994 (with numerous examples in Tables 16-3 and 16-4).

The functionality of the polyisocyanate is preferably 2 or 3, most preferably 3. The equivalent weight of the polyisocyanate is preferably between 84 and 500, most preferably between 150 and 300. The polyisocyanate is preferably aliphatic or cycloaliphatic, most preferably cycloaliphatic.

The molar ratio of NCO functions in the polyisocyanate to the OH functions in the acrylic polymer is of 0.5 to 5, preferably of 1.5 to 4, most preferably of about 3.

The isocyanate is preferably blocked to allow a one-pot formulation of the primer. As known in the art, it is preferable to use a catalyst for the unblocking reaction . The nature and amount of catalyst required are well known in the art and need not be described here. There is typically used dibutyl tin dilaurate.

The primer of the invention further contains one or more pigments and/or fillers which, though not essential, have the advantage of reducing the cost of the formulation. The preferred weight ratio of pigment to binders is of about 1:2. When used on a steel substrate, the primer advantageously contains one or more anti-corrosive pigments, the most preferred one being strontium chromate.

The primer of the invention still further contains one or more solvents, in an amount such as to obtain a primer formulation having an appropriate viscosity (i.e. a viscosity adapted to the application method).

The primer of the invention may finally contain any one or more of the usual additives, such as thixotropic agents, anti-sagging agents, anti-settling agents and/or flow agents.

The primer formulation is applied on the substrate by any appropriate means known in the art, generally by roller coating. The dry film thickness may range from a few micrometers up to about 0.1 mm; in coil coating, typical dry film thickness of a primer layer is of 5 to 10 µm, preferably of about 6 µm.

The wet primer film is then cured in an oven, at a peak metal temperature (PMT) of 180 to 250°C; in a typical coil coating line operating at 120 m/s, this corresponds to heating for about 30 s.

A topcoat layer of PVC-plastisol is then applied on the primed substrate by any appropriate means known in the art, generally by reverse roller coating. The dry film thickness may range from 50 to 500 µm, preferably from 100 to 200 µm.

The wet PVC-plastisol layer is then gelled in an oven, at a PMT of 180 to 250°C, preferably of 220 to 240°C; in a typical coil coating line operating at 120 m/s, this corresponds to heating for about 30 s.

### Examples

### Example 1

### Preparation of a carboxy- and hydroxy-functional acrylic polymer

The monomers used were :
- - 86.92 wt% methyl methacrylate: (MMA)
- - 10.00 wt% butyl acrylate: (BA)
- - 02.32 wt% hydroxyethyl methacrylate: (OH-EMA)
- - 00.76 wt% methacrylic acid: (MA-acid)

There was prepared a mixture of 1000 g of monomers (according to the above composition) and 10 g of *tert*-butyl-peroxy-2-ethylhexanoate (TBPEH) as initiator.

In a 5 litres flask provided with a reflux condenser, 666 g of xylene were heated to 90°C under nitrogen. The mixture of monomers and initiators was then added continuously over a period of 4 hours. One hour thereafter, there was added 334 g of xylene and 0.8 g of TBPEH. Yet another hour thereafter, there was made a second addition of 0.8 g TBPEH. Throughout the polymerisation, the reactor content was kept at about 90°C under nitrogen while stirring. After a total of six hours at about 90°C, the temperature was raised to 105°C during 30 minutes to end the polymerisation reaction.

The final polymer solution was diluted to a solids content of 35 wt% by adding 878 g of a mixture of methyl esters of succinic, adipic and glutaric acids as solvents (hereinafter the ester mixture).

The following properties were determined :

| | |
|---|---|
| - viscosity | 20 dPa.s (Haake; 23°C) |
| - solids content | 35 wt% |
| - molecular weight | 57700 |
| - acid number | 5 mg KOH/g of polymer |
| - hydroxyl number | 10 mg KOH/g of polymer |
| (hydroxyl equivalent | 56100/iOH = 5610) |
| - Tg | 78.8°C |

### Preparation of a primer

The following components were added into a ball mill then milled together :

| | |
|---|---|
| - the above polymer solution | 22.6 parts by weight (pbw) |
| - strontium chromate | 7.34 pbw |
| - titanium dioxide | 4.52 pbw |
| - additives | 0.34 pbw |
| - RPDE | 5.65 pbw |

After milling, the following components were further added :

| | |
|---|---|
| - the above polymer solution | 33.18 pbw |
| - polyisocyanate (75 wt% in naphtha) | 6.51 pbw (blocked; equivalent weight = 378; trifunctional) |
| - dibutyltin dilaurate | 0.56 pbw |
| - methyl isobutyl ketone (MIBK) | 5.65 pbw |
| - ester mixture | 13.56 pbw |

Accordingly, the primer paint had a pigment to binder weight ratio of 0.486 and a NCO : OH molar ratio of 3.7.

### Preparation of a PVC-plastisol

A PVC-plastisol was prepared which had the following composition :

| | |
|---|---|
| - pigments and fillers | 56 pbw |
| - PVC | 28 pbw |
| - phthalate plastifiers | 9 pbw |
| - stabilisers | 3 pbw |
| - solvent | 4 pbw |

### Preparation of a composite

A coil of 0.6 mm thick Galfan steel was passed through a coil coating line with the following steps :
- roller coating of a 6 µm (dry film thickness) layer of primer;
- heating to a PMT of 241°C;
- reverse roller coating of a 200 µm (dry film thickness) layer of PVC-plastisol
- heating to a PMT of 216°C.

The following properties were determined :
A. Impact resistance
ISO 1520-1973 standard method was used.

**Table 1**

| resistance notation after a 150 kg.cm impact | | | | |
|---|---|---|---|---|
| Time after coating (days) | 0 | 7 | 14 | 28 |
| Temperature (°C) | | | | |
| +20 | 5 | 5 | 5 | 5 |
| +5 | 4 | 4 | 3.5 | 3.5 |
| -10 | 4 | 4 | 2 | nd |
| -20 | 1 | nd | nd | nd |

- Legend for Table 1 :: 5 : no cracks visible with naked eyes
4 : slight cracks visible with naked eyes
3 : cracks; no delamination
2 : delamination (brittle layer)
1 : delamination (peeling)
nd: not determined

B. Cut edge adhesion
The coated panel was cut, the blade cutting the panel from the coated side. The coating was then removed from the cut edge, using a finger. Cut edge adhesion was measured by the extent of delamination measured from the cut edge.

**Table 2**

| delamination from cut edge (mm) | | | | |
|---|---|---|---|---|
| Time after coating (days) | 0 | 7 | 14 | 28 |
| Temperature (°C) | | | | |
| -10 | 0.5 | 0.5 | nd | nd |
| -20 | 2 | 2 | nd | nd |

C. QUV B exposure
ASTM G53-88 standard method was used. The apparatus used was the apparatus sold by The Q-Panel Company, using UV-B lamps n° UVB-313. The cycle consisted of a succession of 4 hours periods of UV exposure at 60°C each followed by 4 hours periods of condensation at 40°C.
A square pattern was made in the coating before exposure, using a cutter blade; adhesion was tested after exposure using the tip of the cutter blade. No delamination was observed after 2000 hours exposure.
D. Boiling water test

**Table 3**

| adhesion after boiling water exposure | | | | |
|---|---|---|---|---|
| Time in boiling water (hours) | 0 | 2 | 4 | 8 |
| Adhesion (/5) | 3 | 3 | 3 | 3 |

Two double cross patterns (# #) were made in the coating of 4 panels, using a cutter blade; the spacing between the parallel lines was of 5 mm.

An 8 mm Erichsen deformation was made in the centre of each double cross pattern.

One panel was evaluated as such, while the others were dipped in boiling water respectively during 2, 4 and 8 hours before evaluation.

Adherence of each of the four stripes created by the double cross pattern was evaluated by inserting the tip of a cutter blade between the coating and the substrate and slowly delaminating the stripe. Adhesion is reported as 5 (or 5/5) when no delamination occurs, as 0 (or 0/5) when delamination is observed down to the Erichsen deformation limit, and as 1, 2, 3 or 4 between those extremes; the average determinations are reported in Table 3.

## Claims

1. Primer for PVC-plastisol based on a carboxy- and hydroxy-functional acrylic polymer cross-linked with a polyisocyanate.

2. Primer according to claim 1, wherein the acrylic polymer has
(a) a hydroxyl number of 5 to 40 mg KOH/g, preferably of 10 to 20 mg KOH/g;
(b) an acid number of 2 to 20 mg KOH/g, preferably of 5 to 10 mg KOH/g;
(c) a glass transition temperature (Tg, measured by differential scanning calorimetry) of 50 to 110°C, preferably of 70 to 90°C; and
(d) a weight average molecular weight Mw of 10,000 to 260,000, preferably of 50,000 to 80,000.

3. Primer according to either of claim 1 and 2, wherein the polyisocyanate has
(i) a functionality of 2 or 3;
(ii) an equivalent weight of from 84 to 500; and
(iii) an aliphatic or cycloaliphatic structure.

4. Primer according to claim 3, wherein the polyisocyanate has
(i) a functionality of 3;
(ii) an equivalent weight of from 150 to 300; and
(iii) a cycloaliphatic structure.

5. Primer according to any one of claims 1 to 4, wherein the molar ratio of NCO functions in the polyisocyanate to the OH functions in the acrylic polymer is of 0.5 to 5.

6. Primer according to claim 5, wherein said molar ratio is of 1.5 to 4.

7. Primer according to any one of claims 1 to 6, wherein the isocyanate functions in the polyisocyanate are blocked.

8. Use of the primer according to any one of claims 1 to 7 on a steel substrate.

9. Use of the primer according to any one of claims 1 to 8 in coil coating.

10. Use according to claim 9 in the coil coating of a steel substrate with PVC-plastisol.
